# FASCICULE DE BREVET EUROPEEN

(11) **EP 2 915 349 B1**
(45) Date de publication et mention de la délivrance du brevet: **19.04.2017**
(21) Numéro de dépôt: 13798242.7
(22) Date de dépôt: 05.11.2013
(51) Int. Cl.: H04L 29/06, H04W 12/06, H04W 84/04, H04W 4/10

(54) **PROCEDE D'INITIALISATION D'APPEL RAPIDE D'APPLICATION DE TYPE PTT SUR UN RESEAU CELLULAIRE IP-WAN**
SCHNELLES VERFAHREN ZUR INITIALISIERUNG EINES RUFS FÜR EINE PTT-ANWENDUNG IN EINEM ZELLULAREN IP-WAN-NETZWERK
FAST METHOD OF INITIALIZING A CALL FOR AN APPLICATION OF PTT TYPE ON AN IP-WAN CELLULAR NETWORK

(30) Priorité: 05.11.2012 FR 1202964
(43) Date de publication de la demande: 09.09.2015
(73) Titulaire: Airbus DS SAS, 78990 Elancourt (FR)
(72) Inventeur: PISON, Laurent, 78760 Jouars Ponchartrain (FR); PATEROUR, Olvier, F-78280 Guyancourt (FR)
(74) Mandataire: Cabinet Camus Lebkiri
(86) Numéro de dépôt international: PCT/EP2013/003315
(87) Numéro de publication internationale: WO 2014/082707

(56) Documents cités:
- GB-A- 2 454 979
- US-A1- 2010 015 974
- US-B1- 7 170 863

## Description

### Domaine de l'invention

La présente invention se rapporte au domaine des systèmes numérique privés de radiocommunication mobile. Elle trouve des applications particulièrement avantageuses dans les systèmes privés de radiocommunication professionnelle (ou système PMR, pour Professional Mobile Radio en anglais).

Ce système de radiocommunication selon l'invention a pour but de donner à des applications PTT (pour Push To Talk, en anglais), utilisant une infrastructure d'accès à un réseau de type radioélectrique, basé sur une technologie IP-WAN (pour IP Wide Area Network, en anglais) unicast, tel que la 3G+, la 4G, et d'autres, la possibilité d'initialiser rapidement une communication.

### Etat de la technique et problèmes techniques rencontrés

Dans le domaine des systèmes numériques privés de radiocommunication mobile appelé par la suite système PMR, il existe une catégorie de terminaux mobiles utilisant une méthode de communication dite PTT (pour Push To Talk, ou Press To Transmit). Cette méthode de communication s'effectue sur une liaison half-duplex, et repose sur l'appui d'un bouton pour commuter le terminal PMR d'un état récepteur à un état émetteur de données, telles que la phonie, notamment, mais plus généralement de données de toute nature. On entend par liaison half-duplex un canal de communication permettant le transport de données dans les deux sens, mais pas simultanément, autrement dit, soit en lien montant (ou UpLink, en anglais) pour un canal de communication émis à partir du terminal, ou soit en lien descendant (ou Down-Link, en anglais), pour un canal de communication reçu par le terminal.

La méthode de communication Push To Talk est un service vocal temps réel, implémenté sur un réseau de données par paquets. Ainsi, un terminal PTT assure une communication directe par appui d'une touche et permet d'établir une liaison avec un autre terminal ou avec un ensemble de terminaux.

Dans le cadre d'une utilisation pour des appels de groupe pouvant aller jusqu'à plusieurs centaines d'utilisateurs, une des principales contraintes d'un système PTT est de pouvoir être capable de supporter un temps de latence de 300ms entre un premier utilisateur effectuant un appel vocal en appuyant sur le bouton PTT et tous les autres utilisateurs recevant cet appel. Pour effectuer cet appel, il y a en premier lieu une première étape de signalisation, puis une deuxième étape de connexion des médias et enfin une troisième étape permettant à tous les utilisateurs habilités à être à l'écoute du média émetteur de l'appel, de recevoir le flux de ce dit appel correctement.

Cette valeur de latence est indépendante de l'état de l'appel, et toujours inférieure à la valeur maximale de 300ms. Cette valeur de latence peut même atteindre 500ms en cas de système multiple.

En ce qui concerne, le principe actuel des PTT à bande étroite (ou Narrowband en anglais), tels que les technologies PTT P25, TETRA, ou TETRAPOL, cette valeur de 300ms est atteinte au moyen :
- d'une structure d'application qui manage la structure radio physique de la couche de liaison ;
- de ressources physiques dédiées allouées par canal (TCHs ou Trunked CHannels en anglais) ;
- d'une ressource physique allouées pour la signalisation PTT, notamment le CCH (Control Channel en anglais) en lien montant et en lien descendant ;
- d'une bande de signalisation à l'intérieur des TCHs pour définir la rapidité du temps de signalisation pour de multiples utilisateurs ;
- d'un lien montant dédié à chaque canal TCHs/CCH en mode litigieux.

Par conséquent, chaque canal alloué aux couches de liaison physique, permet d'atteindre les 300ms.

En ce qui concerne, le principe actuel des PTT sur téléphone cellulaire ou PoC (pour PTT over Cellular en anglais) fonctionnant sur des technologies à large bande ou BB (pour Broad Band en anglais), celui-ci ne répond pas aux contraintes de 300ms de temps réel.

En effet, dans le cas d'un PoC fonctionnant sur un protocole OMA PoC, celui-ci est dépendant du temps de transport du flux. A l'heure actuelle, seules les technologies 3G+ et 4G offrent un temps de transport du flux correct, mais pas suffisant pour atteindre tous les utilisateurs d'un groupe en respectant les 300ms. En effet, aucunes ressources du réseau IP-WAN et radio ne sont pré-affectées à une session OMA POC, puisque cela conduit à devoir rechercher le terminal mobile dans une zone connue par l'intermédiaire de l'envoi d'un message de paging sur le canal Paging Channel (PCH)), et de ce fait la valeur de latence de 300ms n'est pas atteinte pour tous les utilisateurs à leur activation.

Il existe donc un besoin de fournir une solution technique permettant de garantir un temps de latence de 300ms pour l'initialisation d'un appel de groupe pour les PoC.

### Exposé de l'invention

La présente invention vise à résoudre l'ensemble des inconvénients de l'état de la technique ainsi que décrit par example dans le document US2010/0015974 A1. Pour cela, l'invention propose un procédé d'initialisation d'appel rapide d'application de type PTT sur un réseau cellulaire IP-WAN, selon la revendication 1 et des revendications suivantes.

L'invention est mise en oeuvre aux moyens d'attribution de ressources au niveau des applications tels que :
- une session individuelle de signalisation pour la mono diffusion (Unicast en anglais) du lien montant UL et du lien descendant DL. Cette signalisation pouvant être basée sur n'importe quel protocole SIP (Session Initiation Protocol en anglais), permettant d'établir, modifier et terminer une session ; ou encore n'importe quel protocole basé ou non sur de l'IP (Internet Protocol en anglais) ;
- une session individuelle Unicast d'un média en lien montant pour chaque utilisateur émetteur vocal (Talker en anglais) dans le groupe d'utilisateur. Dans le reste de la description, le terme média signifie que celui-ci contient une données à transmettre comme par exemple des paquets IP de voix, de vidéos, ou d'autres données ;
- une session individuelle Unicast du média en lien descendant pour tous les utilisateurs récepteurs vocal (Listerners en anglais) dans le groupe d'utilisateur.

Les médias peuvent être supportés pour n'importe quel codec (Abréviation qui, dans le cadre de cette description, correspond à un logiciel apte à COder et à DECoder une (ou un ensemble de) donnée(s)) de voix, et transportés comme une donnée. En général, le média est supporté sur le protocole IP/RTP (pour Real Time Protocol en anglais) ou tout autre protocole apte à supporter la voie en temps réel, pour la même qualité de service ou QoS (pour Quality of Service, en anglais).

L'invention comporte également des moyens d'attribution de ressources au niveau du réseau étendu de transport ou WAN (pour Wide Area Network en anglais), tels que :
- une signalisation Unicast UL/DL pour le canal de données ;
- un média UL porteur de données pour l'utilisateur émetteur vocal (ou talker en anglais) ;
- un média DL porteur de données pour chaque utilisateur récepteur vocal (listener, en anglais). C'est le principe du multi-unicast, où chaque utilisateur d'un groupe d'appel est atteint par une méthode unicast, un serveur étant en charge pour le multi-unicast du flux à tous les utilisateurs récepteur du groupe d'appel.

L'invention permet ainsi à chaque utilisateur de pouvoir se connecter à un réseau de transport, de pouvoir s'enregistrer au service PTT et à d'autre type de services comme la vidéo si besoin.

L'invention permet également à chaque utilisateur de pouvoir s'enregistrer à un ou plusieurs groupe(s) d'appel. Au moyen de l'invention, il est possible d'écouter un appel de groupe ainsi que ses activités radio. L'utilisateur peut être le premier requérant de l'appel, par l'intermédiaire d'une procédure de signalisation PTT si l'appel n'a pas encore été initialisé.

L'invention permet à l'utilisateur de recevoir le média ainsi que la signalisation. Elle permet également le changement du droit à la parole accordé à un utilisateur, sur requête des autres utilisateurs enregistrés dans le groupe et d'un arbitrage au niveau du serveur PTT.

L'invention a donc pour objet un procédé d'initialisation d'appel pour un terminal mobile comportant des applications de type PTT sur un réseau cellulaire IP-WAN, ledit procédé comportant les étapes suivantes, pour chaque utilisateur dudit terminal mobile connecté à un modem IP-WAN destiné à s'enregistrer pour un appel de groupe :
- une étape, s'enclenchant au démarrage du modem IP-WAN, durant laquelle s'effectue une procédure de connexion au réseau IP-WAN,
- une étape, où lorsque le client PTT est actif, et qu'il a obtenu l'adresse IP du serveur PTT, le client PTT est apte à déclencher une procédure d'enregistrement du SIP avec le serveur PTT sur la porteuse IP-WAN par défaut,
- une étape, où le client PTT procède à une procédure d'affiliation à un groupe d'appel avec le serveur PTT sur la porteuse IP-WAN par défaut, caractérisé en ce que, à
- une étape, où dès que la procédure d'affiliation au groupe d'appel est effectuée, une procédure SIP « INVITE » est exécutée pour réserver des ressources RTP au niveau applicatif du côté du serveur PTT et du côté client PTT, de sorte à permettre la montée de la session RTP immédiatement après la procédure d'affiliation du client PTT au groupe.

L'invention comporte également l'une quelconque des caractéristiques suivantes :
- pour effectuer cette procédure SIP, le client PTT envoie un message d'invitation « SIP INVITE » pour son serveur PTT afin de requérir l'initialisation d'une session RTP pour le média voix ;
- l'étape, durant laquelle s'effectue une procédure de connexion au réseau IP-WAN, comporte une phase d'authentification, permettant au modem IP-WAN d'être enregistré dans le réseau IP-WAN ;
- la procédure de connexion au réseau IP-WAN prévue à l'étape durant laquelle s'effectue une procédure de connexion au réseau IP-WAN permet au modem IP-WAN d'être accessible au moyen d'adresses IP allouées et associées à une porteuse par défaut, avec un QCI définie dans le HSS ;
- avant d'envoyer une inscription SIP au serveur PTT, le client PTT a la possibilité d'obtenir l'adresse IP du serveur PTT à partir du serveur DNS ;
- avant d'envoyer une inscription SIP au serveur PTT, le client PTT, à la possibilité d'obtenir l'adresse IP du serveur PTT à partir d'une configuration manuelle ;
- une fois que la session RTP et que le port RTP sont alloués au serveur PTT, un message indiquant que le protocole SIP 200 est actif « SIP 200 OK » est envoyé au client PTT en incluant l'adresse IP et le port du serveur PTT pour la session RTP ;
- un message de battement de coeur est échangé entre le serveur PTT et le client PTT pour maintenir la connexion active au niveau radio RRC IP-WAN, pour maintenir la session applicative RTP active et pour effectuer une supervision entre le client PTT et le serveur ;
- la session RTP reste active entre le serveur PTT et le client PTT jusqu'au désenregistrement du client PTT, ou de la destruction du groupe.
- si aucune activité n'est détectée durant une période configurable, typiquement 30 secondes, alors, le serveur PTT relâche les ressources du réseau LTE, mais pas les ressources de la session RTP applicative, qui elle reste active.

### Brève description des figures

L'invention sera mieux comprise à la lecture de la description qui suit et à l'examen des figures qui l'accompagnent. Celles-ci ne sont présentées qu'à titre illustratif, mais nullement limitatif de l'invention. Les figures montrent :
- Figure 1 : une représentation schématique du flux d'appel lors d'une phase d'initialisation des ressources du PTT pour chaque utilisateur s'enregistrant pour un appel de groupe auprès d'un serveur PTT, selon un mode de réalisation de l'invention ;
- Figure 2 : une représentation schématique du flux d'appel lors d'une requête primaire de clients PTT, selon un mode de réalisation de l'invention ;

### Description de l'invention

On note dès à présent que les figures ne sont pas à l'échelle.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Afin d'accéder à un serveur 3 d'applications PTT (Push to Talk en anglais) via un terminal (non représenté) de type téléphone cellulaire, le terminal comporte un client PTT 1, 1a, 1b. Ce type de téléphone cellulaire étant destiné à un fonctionnement sur un ou plusieurs réseaux 4 IP-WAN, tel que le LTE (pour Long Term Evolution), et/ou la 3G (pour 3^{ème} Génération), et/ou du WIMAX (pour ...), et/ou du WIFI, et/ou tout autre technologie large bande, il dispose pour chaque type de réseau 4 IP-WAN, d'une connexion à un modem 2, 2a, 2b. Dans un mode de réalisation préférentiel, ce modem 2, 2a, 2b est intégré directement au terminal. Ainsi, le téléphone cellulaire, doté respectivement à la fois d'un client PTT 1, 1a, 1b et d'un modem IP 2, 2a, 2b, forme un ensemble appelé généralement PoC (pour PTT over Cellular en anglais).

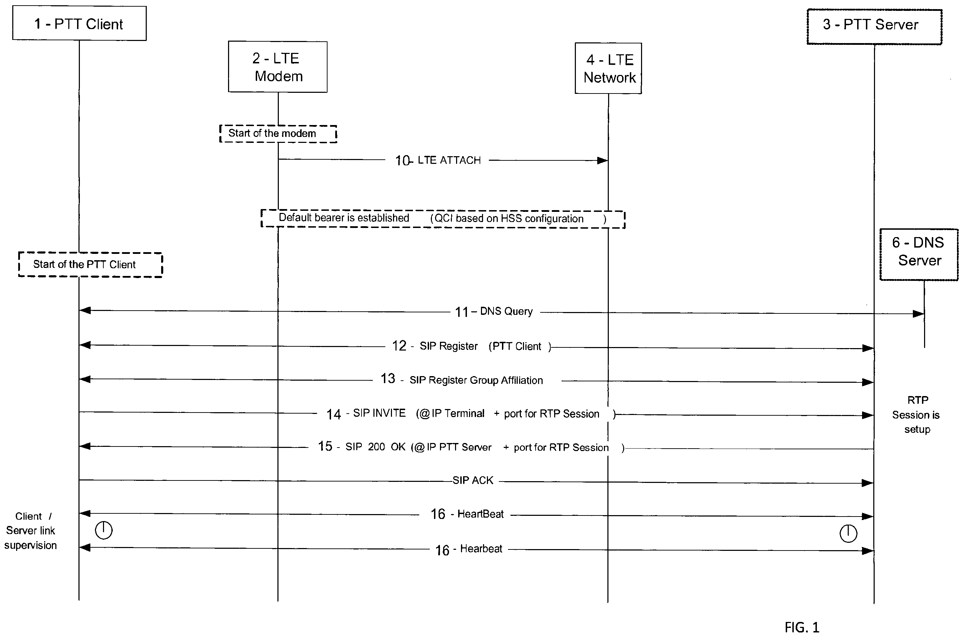

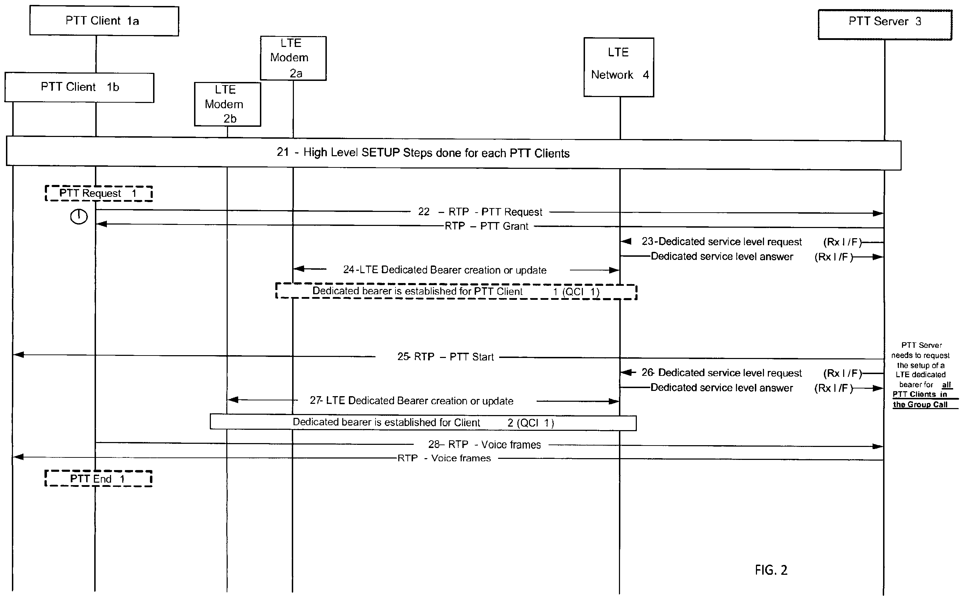

Le fonctionnement de ce terminal PoC va maintenant être décrit de manière très générale. Un exemple de mode de réalisation avec un réseau IP-WAN de type LTE sera pris par la suite pour illustré le séquençage des étapes aux figures 1 et 2.

Dans un premier temps, le terminal PoC est connecté à un réseau 4 de transport radioélectrique de type IP-WAN. Ce terminal PoC est alors est alors authentifié et enregistré, lors de son initialisation par un utilisateur, à la fois au niveau d'un registre utilisateurs de l'application ou client PTT 1, 1a, 1b, mais également au niveau du registre utilisateurs du groupe d'appel applicatif. Cet enregistrement du terminal PoC est très utile, notamment, notamment afin de pouvoir joindre le terminal par la suite.

Lorsque le terminal PoC est connecté au réseau 4 IP-WAN et qu'il se trouve enregistré au niveau des différents registres précédemment cités, alors le réseau 4 alloue des ressources média en lien montant et descendant entre le client PTT 1 et le serveur 3, via par exemple une procédure SIP (pour Session Initialization Protocol, en anglais), avec un message d'invitation « INVITE ».

Lorsque la procédure SIP a déjà été exécutée, il n'est plus nécessaire de l'exécuter de nouveau, puisque le signal et le média pour l'appel de groupe seront utilisés uniquement par la session média RTP..

Il est alors nécessaire de s'assurer que ces ressources applicatives et de transports associés restent toujours installées et prêtes pour supporter le trafic, que ce soit un signal ou un média, de manière efficace.

Au niveau de l'application, les ressources ont besoin d'être gardés actives jusqu'à n'importe quelle désinscription d'un utilisateur du groupe.

Au niveau du transport et plus particulièrement au niveau radio, les ressources radio doivent être gardées activées le plus longtemps possible. Autrement dit, en ce concerne la technologie LTE (pour Long Term Evolution, en anglais), la couche RRC reste toujours active, et ne retourne pas à l'état de veille (ou idle en anglais), même si il n'y a pas ou peu de trafic supporté par la connexion. En effet, si la couche RRC se trouve à l'état idle, alors il va falloir envoyer un paging au terminal mobile pour remonter la connexion radio et cela ne permettra pas de garantir les 300ms. Cela peut être effectué par n'importe quelle activité périodique entre un utilisateur et n'importe quel serveur d'application, comme par exemple, via un message de battement de coeur pour maintenir la connexion active et maintenir la session RTP active, par exemple, jusqu'au désenregistrement d'un client PTT ou de la destruction du groupe.

Cela peut être appliqué pour des appels de groupe multiples en parallèle, à l'intérieur d'application voix PTT.

Il peut y avoir également une application pour PTT sur d'autre média transféré sous forme de flux continus, tels que la vidéo, la voix, la vidéo et la voix combinées, etc..

La figure 1 est une représentation schématique du flux d'appel lors d'une phase d'initialisation des ressources PTT pour chaque utilisateur s'enregistrant pour un appel de groupe auprès d'un serveur PTT, via un réseau LTE, selon un mode de réalisation de l'invention.

Ainsi, à une étape 10 préliminaire, au démarrage du modem 2 LTE, la procédure de connexion de la technologie radioélectrique LTE est déclenchée, incluant du même coup la phase d'authentification, permettant au modem 2 LTE d'être enregistré dans le réseau 4 LTE. Le résultat de cette procédure de connexion LTE est que le modem 2 est accessible au moyen d'adresses IP allouées et associées à une porteuse, avec un QCI (pour QoS Class Indicator en anglais) de signalisation qui n'est pas forcément un canal par défaut. Ce QCI est défini dans le HSS, qui n'est autre que la base de données des utilisateurs pour le 3GPP, incluant notamment la technologie LTE. En effet, la porteuse est dite par défaut, parce qu'un nom du point d'accès IP pour un ensemble de services dans le réseau ou APN (pour Access Point Name, en anglais) est dédié au PTT. Il est attendu qu'un APN pour les services voix, et la QCI par défaut peut être par exemple QCI5 (qui servira pour la signalisation SIP) et QCI1 pour le média.

A une étape 11, avant d'envoyer l'inscription SIP au serveur 3 PTT, le client PTT 1 à la possibilité d'obtenir l'adresse IP du serveur 3 PTT à partir du serveur 6 DNS.

A une étape 12, une fois que le client PTT 1 est actif, qu'il a obtenu l'adresse IP du serveur 3 PTT, via le serveur DNS ou par configuration manuelle, afin de contrôler la connectivité, le client PTT est apte à déclencher une procédure d'enregistrement du SIP avec le serveur 3 PTT sur la porteuse LTE par défaut.

A une étape 13, le client PTT procède à une procédure d'affiliation du groupe avec le serveur 3 PTT sur la porteuse LTE par défaut.

A une étape 14, dès que la procédure d'affiliation au groupe est effectuée, une procédure SIP « INVITE » est exécutée pour réserver des ressources RTP au niveau applicatif du côté du serveur 3 PTT et du côté client 1 PTT. Pour effectuer cette procédure SIP, le client PTT 1 envoie un message d'invitation « SIP INVITE » pour son serveur 3 PTT afin de requérir l'initialisation d'une session RTP pour le média voix. Il est à noter que la session RTP est initialisée, mais que la porteuse LTE dédiée n'est pas initialisé à cette étape, afin d'éviter la consommation non nécessaire des ressources LTE GBR (pour Guaranteed Bit Rate, en anglais).

Cette étape 14 a pour avantage de permettre la montée de la session RTP immédiatement après la procédure d'affiliation du client PTT 1 au groupe. Ainsi, lorsqu'une d'une requête du client PTT 1 survient, parce que ce dernier est prêt à dialoguer sur la session RTP, cela lui est possible sans avoir besoin de passer par une étape exécutant la procédure « SIP INVITE » comme dans l'état de la technique.

En effet, cette procédure « SIP INVITE » est plus ou moins longue et nécessite d'être faite simultanément pour chaque terminal du groupe. Dans l'état de la technique, une séquence d'envoie de requête « SIP INVITE » avec accusé réception « ACK » de la dite requête devait être effectuée pour tous les terminaux mobiles du groupe, alors qu'avec l'invention il faut uniquement un message « RTP - PTT Start » pour montée la session RTP.

En revanche, le fait d'avoir monté la session RTP au plus tôt, nécessite toutefois de maintenir la connexion active pour un maximum de réactivité parce que sinon la couche RRC radio peut repasser en mode idle, ce qui va nécessiter un paging au moment d'avoir besoin de joindre le terminal mobile.

Quelque que soit le temps écoulé entre deux requêtes PTT, la session RTP reste active tout le temps, jusqu'au désengeristrement du groupe du client PTT 1, et n'est pas relâchée au niveau applicatif au bout de 30s, comme cela est effectué de manière classique dans l'état de la technique empêchant ainsi de garantir les 300ms de temps de latence.

A une étape 15, une fois que la session RTP et que le port RTP sont alloués au serveur 3 PTT, un message indiquant que le protocole SIP 200 est actif « SIP 200 OK » est envoyé au client PTT en incluant l'adresse IP et le port du serveur 3 PTT pour la session RTP.

A une étape 16, une fois que la session RTP est montée, alors un message de battement de coeur est périodiquement échangé sur la porteuse par défaut, afin de maintenir la couche radio RRC active et également effectuer une supervision entre le client PTT et serveur. Le battement de coeur est une des possibilités utilisées pour tenir la connexion montée, mais elle est d'autant plus utilisée si une supervision est imposée. Il est à noter tout de même, que tout trafic régulier peut également tenir la connexion active sans repasser en mode veille (ou idle, en anglais), comme par exemple, la remontée périodique d'une position GPS, ou tout autre trafic tel que, de la présence ou de la supervision applicative, ou etc.

La figure 2 est une représentation schématique du flux d'appel lors d'une phase de requête primaire de clients PTT respectivement référencé 1a et 1b, via un réseau LTE, selon un mode de réalisation de l'invention ;

Ainsi, à une étape 21, les étapes 10 à 16 d'initialisations précédemment décrites sont exécutées pour chaque client PTT 1a, 1b, cherchant à envoyer une première requête PTT sur le protocole RTP.

A une étape 22, le client PTT 1a initie une requête PTT, laquelle est délivrée au serveur 3 PTT. Un compteur de temps présent au niveau du client PTT 1a détermine le délai d'attente de la délivrance de la requête au serveur 3 PTT.

A une étape 23, exécutée uniquement pour une utilisation avec un réseau LTE, le serveur 3 PTT émet des requêtes vers le réseau 4 LTE pour initialiser les ressources LTE, qui seront dédiées à la porteuse QCI 1. La porteuse QCI 1 est apte, selon les caractéristiques du standard 3GPP LTE, à supporter le service voix pour la communication PTT. Il est à noté qu'une fois que la requête est prise en compte par le réseau 4 LTE, cela ne signifie pas que le réseau 4 LTE réussira à établir l'ensemble des ressources LTE appropriées nécessaire à cette étape. Cette étape 23 est exécutée obligatoirement pour la première itération.

A une étape 24, le réseau 4 LTE initialise la porteuse LTE dédiée. Pour l'initialisation de la porteuse LTE, il peut s'agir d'une création ou d'une mise à jour dans le cas où celle-ci existe. La porteuse LTE est apte à supporter la qualité de service ou QoS (pour Quality of Service, en anglais) pour le service voix pour les services PTT, au sens de la porteuse LTE QC1. La connexion IP du lien descendant et du lien montant est effectuée dans le réseau 4 LTE et dans le modem 2a, 2b LTE, afin de router les paquets du lien descendant et du lien montant vers la porteuse LTE dédiée.

Il est à noter que si aucune activité n'est détectée durant une periode configurable, typiquement 30 secondes, alors le serveur 3 PTT relâche les ressources du réseau LTE, mais pas les ressources de la session RTP applicative, qui elle reste active. Par conséquent, à la prochaine requête PTT délivrée au serveur 3 PTT, les étapes 23 et 24 sont réitérées.

A une étape 25, tous les clients PTT 1a, 1b, qui se trouvent dans le groupe d'appel sont informés qu'un des clients PTT 1a, ou 1b, veut communiquer avec les autres clients PTT du groupe d'appel, et reçoivent un message de début de communication PTT « PTT Start » sur la porteuse LTE par défaut.

A une étape 26, pour tous les clients PTT se trouvant dans le groupe, les requêtes du serveur 3 PTT au réseau 4 LTE initialisent une porteuse dédiée au support du service voix comme définie précédemment à l'étape 23.

Les étapes 25 et 26 pouvant être réalisées en parallèles.

A une étape 27, pour tous les clients PTT se trouvant dans le groupe, le réseau 4 LTE initialise la porteuse LTE dédiée capable de supporter la qualité de service ou QoS pour le service voix pour les communications PTT. En LTE cela se traduit par une porteuse ayant un QCI ayant la valeur 1 ou QCI1. La connexion IP du lien descendant et du lien montant est effectuée dans le réseau 4 LTE et dans le modem 2a, 2b, LTE afin de router les paquets du lien descendant et du lien montant vers la porteuse LTE dédiée.

A une étape 28, des trames de voix sont envoyées et distribuées pour tous les clients PTT 1a, 1b dans le groupe d'appel sur la porteuse LTE dédiée. Il est à noter que la procédure de battement de coeur n'est pas activée tant que les trames de voix sont échangées.

## Revendications

1. Procédé d'initialisation d'appel pour un terminal mobile comportant des applications (1, 1a, 1b) du type d'un client Push-to-Talk PTT pour une communication PTT avec un serveur PTT (3) sur un réseau cellulaire IP-WAN (4), connecté à un modem IP-WAN (2) et destiné à s'enregistrer pour un appel de groupe, ledit procédé comportant les étapes suivantes :
- une étape (10) qui est déclenchée au démarrage du modem IP-WAN, durant laquelle s'effectue une procédure de connexion au réseau cellulaire IP-WAN,
- une étape (12) qui est exécutée lorsque le client PTT est actif et qu'il a obtenu l'adresse IP du serveur PTT, par laquelle le client PTT déclenche une procédure d'enregistrement SIP avec le serveur PTT sur une porteuse IP-WAN par défaut,
- une étape (13) par laquelle le client PTT procède à une procédure d'affiliation à un groupe d'appel avec le serveur PTT sur la porteuse IP-WAN par défaut,
**caractérisé en ce qu'**il comprend en outre :
- une étape (14), exécutée dès que la procédure d'affiliation au groupe d'appel est effectuée, par laquelle une procédure SIP « INVITE » est effectuée pour réserver des ressources RTP au niveau applicatif du côté du serveur PTT et du côté du client PTT, de sorte à permettre la montée d'une session RTP immédiatement après la procédure d'affiliation du client PTT au groupe, mais sans initialiser à cette étape de porteuse dédiée apte à supporter le service voix pour une communication PTT ; et,
- une étape (24) d'initialisation d'une porteuse dédiée, apte à supporter le service voix pour la communication PTT, exécutée seulement en réponse à une requête PTT (22) initiée par le client PTT.

2. Procédé selon la revendication 1, dans lequel, pour effectuer la procédure SIP « INVITE », le client PTT envoie un message d'invitation « SIP INVITE » au serveur PTT afin de requérir l'initialisation d'une session RTP pour le média voix.

3. Procédé selon l'une quelconque des revendications précédentes, dans lequel l'étape (10) durant laquelle s'effectue la procédure de connexion au réseau cellulaire IP-WAN comporte une phase d'authentification, permettant au modem IP-WAN d'être enregistré dans le réseau cellulaire IP-WAN.

4. Procédé selon l'une quelconque des revendications précédentes, **caractérisé en ce que** la procédure de connexion au réseau cellulaire IP-WAN permet au modem d'être accessible au moyen d'adresses IP allouées et associées à une porteuse par défaut, avec un QCI définie dans le HSS.

5. Procédé selon l'une quelconque des revendications précédentes, dans lequel, à une étape (11) exécutée avant d'envoyer une inscription SIP au serveur PTT, le client PTT obtient l'adresse IP du serveur PTT à partir d'un serveur DNS (6).

6. Procédé selon l'une quelconque des revendications 1 à 4, dans lequel, à une étape (11) exécutée avant d'envoyer une inscription SIP au serveur PTT, le client PTT obtient l'adresse IP du serveur (3) PTT à partir d'une configuration manuelle.

7. Procédé selon l'une quelconque des revendications précédentes, dans lequel, à une étape (15), une fois que la session RTP est montée et qu'un port RTP est alloué au serveur PTT, un message « SIP 200 OK » indiquant que le protocole SIP 200 est actif est envoyé au client PTT en incluant l'adresse IP et le port du serveur PTT pour ladite session RTP.

8. Procédé selon l'une quelconque des revendications précédentes, dans lequel, à une étape (16), un message de battement de coeur est échangé entre le serveur PTT et le client PTT pour maintenir la connexion active au niveau radio RRC IP-WAN, pour maintenir la session RTP active et pour effectuer une supervision entre le client PTT et le serveur PTT.

9. Procédé selon l'une quelconque des revendications précédentes, **caractérisé en ce que** la session RTP reste active entre le serveur PTT et le client PTT jusqu'au dés-enregistrement du client PTT ou la destruction du groupe.

10. Procédé selon l'une quelconque des revendications précédentes, dans lequel, si aucune activité n'est détectée durant une période configurable, après l'étape d'initialisation d'une porteuse dédiée apte à supporter le service voix pour la communication PTT, alors, le serveur PTT relâche la porteuse dédiée mais pas les ressources de la session RTP qui elle reste active.

## Patentansprüche

1. Anrufinitialisierungsverfahren für ein mobiles Terminal, umfassend Anwendungen (1, 1a, 1b) vom Typ eines Client Push-to-Talk PTT für eine Kommunikation PTT mit einem Server PTT (3) in einem Zellnetz IP-WAN (4), das an ein Modem IP-WAN (2) angeschlossen und dafür bestimmt ist, sich für einen Gruppenanschluss anzumelden, wobei das genannte Verfahren die folgenden Schritte umfasst:
- einen Schritt (10), der beim Starten des Modems IP-WAN ausgelöst wird, in dessen Verlauf ein Anschlussverfahren an das Zellnetz IP-WAN durchgeführt wird;
- einen Schritt (12), der durchgeführt wird, wenn der Client PTT aktiv ist und er die Adresse IP des Servers PTT erhalten hat, durch die der Client PTT ein Speicherverfahren SIP mit dem Server PTT auf einem standardmäßigen Träger IP-WAN auslöst
- einen Schritt (13), mit dem der Client PTT ein Beitrittsverfahren zu einer Anrufgruppe mit dem Server PTT auf dem standardmäßigen Träger IP-WAN durchführt.
**dadurch gekennzeichnet, dass** es darüber hinaus umfasst:
- einen Schritt (14), der ausgeführt wird, sobald das Beitrittsverfahren zur Anrufgruppe durchgeführt wird, mit dem ein Verfahren SIP "INVITE" durchgeführt wird, um Ressourcen RTP auf dem Anwendungsniveau auf der Seite des Servers PTT und auf der Seite des Client PTT derart zu reservieren, dass das Hochfahren einer Session RTP unmittelbar nach dem Beitrittsverfahren des Client PTT zur Gruppe zugelassen wird, aber ohne in diesem Schritt den dedizierten Träger zu initialisieren, der geeignet ist, den Stimmendienst für eine Kommunikation PTT zu unterstützen; und
- einen Initialisierungsschritt (24) eines dedizierten Trägers, der geeignet ist, den Stimmendienst für die Kommunikation PTT zu unterstützen, der nur als Antwort auf eine vom Client PTT initiierte Anfrage PTT (22) ausgeführt wird.

2. Verfahren gemäß Anspruch 1, bei dem zur Durchführung des Verfahrens SIP "INVITE" der Client PTT eine Einladungsmeldung "SIP INVITE" an den Server PTT sendet, um die Initialisierung einer Session RTP für das Stimmenmedium anzufordern.

3. Verfahren gemäß irgendeinem der voranstehenden Ansprüche, bei dem der Schritt (10), in dessen Verlauf das Anschlussverfahren an das Zellnetz IP-WAN durchgeführt wird, eine Authentifizierungsphase umfasst, die dem Modem IP-WAN die Anmeldung im Zellnetz IP-WAN ermöglicht.

4. Verfahren gemäß irgendeinem der voranstehenden Ansprüche, **dadurch gekennzeichnet, dass** das Anschlussverfahren an das Zellnetz IP-WAN dem Modem die Zugänglichkeit zum Adressenmittel IP mit einem im HSS definierten QCI erlaubt, die einem standardmäßigen Träger zugeordnet und zugeteilt sind.

5. Verfahren gemäß irgendeinem der voranstehenden Ansprüche, bei dem in einem Schritt (11), der vor dem Versand einer Eintragung SIP in den Server PTT der Client PTT die Adresse IP des Servers PTT ausgehend von einem Server DNS (6) erhält.

6. Verfahren gemäß irgendeinem der Ansprüche 1 bis 4, bei dem in einem Schritt (11), der vor dem Versand einer Eintragung SIP in den Server PTT ausgeführt wird, der Client PTT die Adresse IP des Servers (3) PP ausgehend von einer manuellen Konfiguration erhält.

7. Verfahren gemäß irgendeinem der voranstehenden Ansprüche, bei dem in einem Schritt (15) eine Meldung "SIP 200 OK", die anzeigt, dass das Protokoll SIP 200 aktiv ist, an den Client PTT gesendet wird, indem die Adresse IP und der Port des Servers PTT für die genannte Session RTP eingeschlossen werden, sobald die Session RTP hochgefahren ist und ein Port RTP dem Server PTT zugeordnet ist.

8. Verfahren gemäß irgendeinem der voranstehenden Ansprüche, bei dem in einem Schritt (16) eine Herzschlagmeldung zwischen dem Server PTT und dem Client PTT ausgetauscht wird, um den aktiven Anschluss am Funkniveau RRC IP-WAN aufrechtzuerhalten, um die aktive Session RTP aufrechtzuerhalten und eine Überwachung zwischen dem Client PTT und dem Server PTT durchzuführen.

9. Verfahren gemäß irgendeinem der voranstehenden Ansprüche, **dadurch gekennzeichnet, dass** die Session RTP zwischen dem Server PTT und dem Client PTT bis zum Abmelden des Client PTT oder der Auflösung der Gruppe aktiv bleibt.

10. Verfahren gemäß irgendeinem der voranstehenden Ansprüche, bei dem, wenn keine Aktivität während einer konfigurierbaren Periode erfasst wird, nach dem Initialisierungsschritt eines dedizierten Träger, der geeignet ist, den Stimmendienst für die Kommunikation PTT zu unterstützen, der Server PTT dann den dedizierten Träger loslässt, aber nicht die Ressourcen der Session RTP, die ihrerseits aktiv bleibt.

## Claims

1. Method of initialising a call for a mobile terminal comprising applications (1, 1a, 1b) of the type of a Push-to-Talk PTT client for a PTT communication with a PTT server (3) on an IP-WAN cellular network (4), connected to an IP-WAN modem (2) and intended to register for a group call, said method comprising the following steps:
- a step (10), which is triggered on starting up the IP-WAN modem, during which there is performed a procedure for connection to the IP-WAN cellular network,
- a step (12) that is executed when the PTT client is active and has obtained the IP address of the PTT server, through which the PTT client triggers a procedure for registering the SIP with the PTT server on a default IP-WAN carrier,
- a step (13) through which the PTT client carries out a procedure for affiliation to the call group with the PTT server on the default IP-WAN carrier,
**characterised in that** it further comprises:
- a step (14), executed as soon as the procedure for affiliation to the call group is carried out, through which an "INVITE" SIP procedure is carried out to reserve RTP resources at the application level on the PTT server side and on the PTT client side, so as to allow the establishment of an RTP session immediately after the procedure of affiliation of the PTT client to the group, but without initialising at this step a dedicated carrier suitable for supporting the voice service for a PTT communication; and,
- a step (24) of initialising a dedicated carrier, suitable for supporting the voice service for the PTT communication, executed only as a response to a PTT request (22) initiated by the PTT client.

2. Method according to claim 1, wherein, in order to carry out the "INVITE" SIP procedure, the PTT client sends an "SIP INVITE" invitation message to the PTT server in order to request initialisation of an RTP session for the voice media.

3. Method as claimed in any preceding claim, wherein the step (10) during which is carried out the connection procedure to the IP-WAN cellular network comprises an authentication phase, allowing the IP-WAN modem to be registered in the IP-WAN cellular network.

4. Method as claimed in any preceding claim, **characterised in that** the connection procedure to the IP-WAN cellular network allows the modem to be accessible by means of IP addresses allocated and associated with a default carrier, with a QCI defined in the HSS.

5. Method as claimed in any preceding claim, wherein, at a step (11) executed before sending a SIP registration to the PTT server, the PTT client obtains the IP address of the PTT server from a DNS server (6).

6. Method according to any of claims 1 to 4, wherein, at a step (11) executed before sending a SIP registration to the PTT server, the PTT client obtains the IP address of the PTT server (3) using a manual configuration.

7. Method as claimed in any preceding claim, wherein, at a step (15), once the RTP session is established and an RTP port is allocated to the PTT server, a "SIP 200 OK" message indicating that the SIP 200 protocol is active is sent to the PTT client including the IP address and the port of the PTT server for said RTP session.

8. Method as claimed in any preceding claim, wherein, at a step (16), a heartbeat message is exchanged between the PTT server and the PTT client in order to keep the connection active on the RRC IP-WAN radio, in order to keep the RTP session active and in order to carry out monitoring between the PTT client and the PTT server.

9. Method as claimed in any preceding claim, **characterised in that** the RTP session remains active between the PTT server and the PTT client until the de-registering of the PTT client or the destruction of the group.

10. Method as claimed in any preceding claim, wherein, if no activity is detected during a period that can be configured, after the step of initialising a dedicated carrier suitable for supporting the voice service for the PTT communication, then, the PTT server releases the dedicated carrier but not the resources of the RTP session which remain active.
